# EUROPÄISCHE PATENTSCHRIFT

(11) **EP 3 528 953 B1**
(45) Veröffentlichungstag und Bekanntmachung des Hinweises auf die Patenterteilung: **15.07.2020**
(21) Anmeldenummer: 17791603.8
(22) Anmeldetag: 11.10.2017
(51) Int. Cl.: B01L 3/02, H01F 7/02, G01N 35/10, H01F 7/16

(54) **PERMANENTMAGNETISCHE KOLBENBAUGRUPPE MIT EINEM PERMANENTMAGNETANORDNUNGEN AUFNEHMENDEN AUSSENSKELETT FÜR EINE PIPETTIERVORRICHTUNG**
PERMANENT-MAGNET PISTON ASSEMBLY COMPRISING AN EXOSKELETON WHICH HOLDS PERMANENT-MAGNET ARRANGEMENTS FOR A PIPETTING APPARATUS
ENSEMBLE PISTON À AIMANTS PERMANENTS MUNI D'UNE OSSATURE EXTÉRIEURE LOGEANT DES AIMANTS POUR UN DISPOSITIF DE PIAGET

(30) Priorität: 18.10.2016 DE 102016220424
(43) Veröffentlichungstag der Anmeldung: 28.08.2019
(73) Patentinhaber: Hamilton Bonaduz AG, 7402 Bonaduz (CH)
(72) Erfinder: ROMER, Hanspeter, 8340 Hinwil (CH); CATTANEO, Heidi, 7302 Landquart (CH)
(74) Vertreter: Ruttensperger Lachnit Trossin Gomoll
(86) Internationale Anmeldenummer: PCT/EP2017/075951
(87) Internationale Veröffentlichungsnummer: WO 2018/073073

(56) Entgegenhaltungen:
- EP-A1- 0 605 903
- EP-A1- 2 656 917
- DE-A1-102012 214 677
- JP-A- 2012 167 968

## Beschreibung

Die vorliegende Erfindung betrifft eine permanentmagnetische Kolbenbaugruppe für eine Pipettiervorrichtung gemäß dem Oberbegriff des Anspruchs 1.

Eine gattungsgemäße Kolbenbaugruppe ist aus der JP 2012-167968 A bekannt.

Aus der DE 10 2012 214 677 A1 ist eine Pipettiervorrichtung mit elektromotorisch angetriebenem Kolben und Magnetfeldabschirmung bekannt. Zwischen axial aufeinanderfolgenden Permanentmagneten, deren Magnetisierung nicht näher beschrieben ist, sind Trennstücke angeordnet.

Eine weitere Kolbenbaugruppe ist aus der WO 2011/083125 bekannt. Diese bekannte Druckschrift lehrt, die Permanentmagnetanordnungen mit alternierend entgegengesetzter Polarisierung anzuordnen, um dort, wo gleichnamige Pole unterschiedlicher Magnetanordnungen einander gegenüberliegen, ein Magnetfeld mit großem Gradienten längs der Kolbenachse zu erzeugen, was die Positionserfassung der Kolbenbaugruppe in einem Führungsrohr einer Pipettiervorrichtung mit magnetfeldbasierten Sensoren erleichtert bzw. die Genauigkeit der Erfassung erhöht.

Obwohl die WO 2011/083125 keine detaillierten Angaben über den konstruktiven Aufbau der Kolbenbaugruppe macht, werden derartige permanentmagnetische Kolbenbaugruppen üblicherweise montiert, indem hohle kreiszylindrische Permanentmagnete in der entsprechenden Polarisierungsfolge stirnseitig miteinander verklebt und zusätzlich auf eine die Permanentmagnete durchsetzende Trägerstange aufgefädelt werden, welche endseitig mit entsprechenden Spannmitteln, wie etwa Unterlegscheiben und Muttern, in ihrer Lage gesichert werden.

Diese konstruktive Ausbildung der Kolbenbaugruppe hat den Vorteil, dass die einzelnen Permanentmagnete eine radiale Außenseite der Kolbenbaugruppe bilden können und somit ein bezogen auf die Kolbenachse radialer Spalt zwischen den Permanentmagneten und einem äußeren, die Kolbenanordnung zur Bewegung antreibenden Magnetfeld klein gehalten werden kann, was die Effektivität eines magnetischen Bewegungsantriebs erhöht.

Diesem Vorteil stehen jedoch Nachteile gegenüber. Die hohlzylindrischen Permanentmagnete bilden verglichen mit massiven Permanentmagneten gleicher Außenabmessungen aufgrund der fehlenden zentralen Masse ein schwächeres Magnetfeld aus. Außerdem wirken durch die alternierend mit entgegengesetzter Polarisierung angeordneten Permanentmagnete erhebliche Kräfte auf die sie zentral durchsetzende Trägerstange, sodass mitunter Verformungen der fertig montierten Kolbenbaugruppe auftreten können, welche bewirken, dass die Kolbenbaugruppe keine kreiszylindrische oder allgemein zylindrische Außenkontur mehr besitzt. Da die Kolbenbaugruppe jedoch in zylindrischen Führungsrohren von Pipettiervorrichtungen längs der dann mit der Kolbenachse zusammenfallenden Führungsrohrachse (Zylinderachse) beweglich geführt sind, kommt es aufgrund der möglichen Verformungen zu Problemen bei der Montage und im Betrieb einer mit einer permanentmagnetischen Kolbenbaugruppe ausgerüsteten Pipettiervorrichtung.

Es ist daher Aufgabe der vorliegenden Erfindung, die gattungsgemäße permanentmagnetische Kolbenbaugruppe derart zu verbessern, dass ihre Position im Betrieb bei mindestens gleich effektiver Ankoppelbarkeit eines äußeren Magnetfelds zu dessen Bewegungsantrieb längs der Kolbenachse mit hoher Genauigkeit erfasst werden kann.

Diese Aufgabe löst die vorliegende Erfindung durch eine permanentmagnetische Kolbenbaugruppe der eingangs genannten Art, welche alle Merkmale des Anspruchs 1 aufweist. Eine erfindungsgemäße Kolbenbaugruppe umfasst ein sich längs der Kolbenachse als Rohrachse erstreckendes Hüllrohr, in dem die Mehrzahl an Permanentmagnetanordnungen aufgenommen ist.

Durch Verwendung des Hüllrohrs, in welchem die Mehrzahl an Permanentmagnetanordnungen aufgenommen ist, kann die Außenkontur des Hüllrohrs auch die Außenkontur der Kolbenbaugruppe bestimmen. Selbst wenn das Hüllrohr die gleiche Masse aufweist wie ein eine gleich lange Mehrzahl von Permanentmagnetanordnungen fixierende Trägerstange, ist das Hüllrohr wegen der größeren radialen Entfernung ihrer Masse von der Kolbenachse bei gleicher Krafteinwirkung weniger stark verformbar. Das Flächenträgheitsmoment des Hüllrohrs ist selbst bei dünner Ausbildung der Rohrwand für eine Biegung um eine beliebige zur Kolbenachse orthogonale Biegeachse erheblich größer als bei einer Trägerstange gleicher Masse.

Zwar wird durch die Verwendung des die Mehrzahl von Permanentmagnetanordnungen umgebenden Hüllrohrs der radiale Spalt zwischen den Permanentmagnetanordnungen und dem sie radial außen umgebenden Magnetfelderzeugungsmittel um die Dicke der Rohrwand des Hüllrohrs vergrößert. Jedoch wird diese Spaltvergrößerung durch die Möglichkeit zur massiven Ausbildung der Permanentmagnetanordnungen, d. h. ohne sie durchsetzendes zentrales Durchgangsloch, mehr als kompensiert.

Als "Permanentmagnetanordnung" gilt vorliegend jede Anordnung mit einem oder mehreren Permanentmagneten, die einen Nordpol und einen Südpol ausbildet. Die Permanentmagnetanordnung kann aus mehreren einzelnen Permanentmagneten gebildet sein, die mit gleicher Polarität aufeinanderfolgend vorgesehen sind. Dies kann aus fertigungstechnischen Erwägungen vorteilhaft sein.

Bevorzugt umfasst eine Permanentmagnetanordnung jedoch genau einen Permanentmagneten, um die Anzahl an Bauteilen gering zu halten, die zur Herstellung der permanentmagnetischen Kolbenbaugruppe notwendig sind.

Somit umfasst die Mehrzahl von Permanentmagnetanordnungen bevorzugt eine Mehrzahl von Permanentmagneten, wobei besonders bevorzugt die Anzahl an Permanentmagneten gleich der Anzahl an Permanentmagnetanordnungen ist.

Durch die Verwendung des Hüllrohrs müssen die Permanentmagneten untereinander nicht mehr notwendigerweise verklebt werden. Dies erleichtert die Montage der Kolbenbaugruppe. Zur Fixierung der Permanentmagneten im Hüllrohr können diese mit dem Hüllrohr durch Klebstoff verbunden sein. Hierzu reicht es jedoch aus, die nach radial innen weisende Wandung des Hüllrohrs oder/und die Mantelfläche von zylindrischen oder prismatischen Permanentmagneten mit Klebstoff zu versehen und die Permanentmagneten dann in das Hüllrohr zu verbringen. Ebenfalls ist es möglich, die Permanentmagneten nach dem Verbringen in das Hüllrohr mit Vergussmasse in ihrer Position zu sichern. Die grundsätzlich mögliche Verwendung von Vergussmasse ist jedoch weniger bevorzugt, da aufgrund von vorteilhaft niedrigen Spaltmaßen eine im Verbringungszustand sehr niedrigviskose Vergussmasse verwendet werden muss oder gegebenenfalls die Spaltmaße erhöht werden müssen, damit die Vergussmasse in die Radialspalte zwischen Hüllrohr und Permanentmagnete eindringen kann. Die Verwendung von Klebstoff, der sich auch in sehr dünnen Filmen auftragen lässt, ist daher bevorzugt.

Zur Modifikation des von den Permanentmagnetanordnungen ausgehenden Magnetfelds ist erfindungsgemäß vorgesehen, dass zwischen zwei längs der Kolbenachse unmittelbar aufeinanderfolgenden Permanentmagnetanordnungen, wobei sich deren gleichnamige Pole gegenüberliegen, ein weichmagnetischer Trennkörper angeordnet ist. Das Material des weichmagnetischen Trennkörpers kann ein ferromagnetisches oder ferrimagnetisches Material sein. Bevorzugt ist es ferromagnetisch.

Durch die Verwendung von weichmagnetischem, d. h. magnetisierbarem, aber nicht dauerhaft magnetisiertem Material, wie etwa Eisen, Nickel und deren magnetisierbare Legierungen, können gerade im Stoßbereich zwischen zwei aufeinander zuweisenden Längsenden von Permanentmagnetanordnungen mit gleichnamigen Polen das von diesen ausgehende Magnetfeld im Vergleich zu einem Luftspalt vorteilhaft modifiziert werden, sodass es im Axialabschnitt eines Stoßbereichs einen besonders starken axialen Magnetfeldgradienten gibt, welcher mit magnetfeldsensitiven Sensoren, wie beispielsweise Hall-Sensoren, sehr positionsgenau und mit geringer Fehlertoleranz erfassbar ist.

Für die gewünschte Wirkung ist ein axial schmaler Trennkörper ausreichend, sodass der wenigstens eine weichmagnetische Trennkörper bevorzugt ein scheibenförmiger Trennkörper ist, dessen mittlere radiale Abmessung orthogonal zur Kolbenachse größer ist als seine mittlere axiale Abmessung längs der Kolbenachse.

Beispielsweise kann der scheibenförmige Trennkörper als flacher Zylinder ausgebildet sein, dessen radiale Abmessung von der Kolbenachse bis zu seinem radial äußersten Rand je nach Gestalt der Permanentmagnetanordnungen um das Zweifache, um das Fünffache oder sogar um mehr als das Fünffache größer sein kann als seine axiale Abmessung.

Sofern der Trennkörper in Umfangsrichtung keine konstante radiale Abmessung aufweist, sondern dessen radiale Abmessung ortsabhängig ist, ist als mittlere radiale Abmessung der Durchschnittswert aller radialen Abmessungen längs des Umfangs über einen repräsentativen Umfangsabschnitt hinweg zu ermitteln. Entsprechendes gilt für die axiale Abmessung, wobei der Trennkörper bevorzugt parallele und zueinander ebene Stirnseiten aufweist und zwischen diesen eine die Stirnseiten verbindende kreiszylindrische Mantel-Außenfläche aufweist.

Wenngleich der Trennkörper gemäß einer Weiterbildung der vorliegenden Erfindung ein ringförmiger scheibenförmiger Trennkörper sein kann, mit einer zentralen axial durchgehenden Ausnehmung, ist die Verwendung von massiven Trennkörpern bevorzugt.

Bevorzugt ist zwischen jeder Stoßstelle der Kolbenbaugruppe, an welcher gleichnamige Pole unterschiedlicher Permanentmagnetanordnungen in axialer Richtung aufeinanderfolgen, je ein weichmagnetischer Trennkörper vorgesehen.

Zur Lagesicherung der Trennkörper im Hüllrohr kann vorgesehen sein, dass der wenigstens eine weichmagnetische Trennkörper mit dem Hüllrohr durch Klebstoff oder Vergussmasse verbunden ist.

Bevorzugt sind die Permanentmagneten ebenso wie die Trennkörper nur mit dem Hüllrohr adhäsiv verbunden, nicht jedoch untereinander, was eine maximale axiale Annäherung der Permanentmagnetanordnungen aneinander oder an einen Trennkörper ermöglicht.

Bevorzugt weist der Trennkörper an seinem Außenumfang die gleiche Gestalt auf wie ein ihm axial benachbart gelegener Permanentmagnet. Bevorzugt weisen alle Permanentmagnetanordnungen bzw. Permanentmagnete der Kolbenbaugruppe wenigstens an ihrem Außenumfang die gleiche Gestalt auf, wobei aus Gründen einer vereinfachten Herstellung die in einer Kolbenbaugruppe verwendeten Permanentmagnete besonders bevorzugt baugleich und damit gestaltgleich sind. Die Trennkörper unterscheiden sich somit in ihrer Außenumfangsgestalt bevorzugt von den Permanentmagnetanordnungen nicht und sind von diesen lediglich hinsichtlich des zu ihrer Bildung verwendeten Materials und hinsichtlich ihrer axialen Länge verschieden.

Grundsätzlich können Trennkörper oder/und Permanentmagnetanordnungen eine beliebige in das jeweilige Hüllrohr passende Gestalt aufweisen, können also prismatisch oder zylindrisch, bevorzugt regelmäßig prismatisch oder kreiszylindrisch geformt sein. Aus den bereits genannten Gründen sind sowohl die Permanentmagnetanordnungen als auch die Trennkörper massiv ausgeführt.

Weiter bevorzugt sind die Permanentmagnetanordnungen oder/und die Trennkörper an ihrem Außenumfang komplementär zur Gestalt der Innenwandung des Hüllrohrs ausgebildet. Dabei soll "komplementär" insbesondere jenen Fall umfassen, dass der zwischen einem Permanentmagneten oder/und einem Trennkörper und dem diesem radial gegenüberliegenden Innenwandabschnitt gebildete Radialspalt längs eines Umlaufs um die Kolbenachse im Wesentlichen konstant ist. Bevorzugt gilt dies für alle zur Kolbenachse orthogonalen Querschnitte.

Zur effektiven Aspiration und Dispensation von Flüssigkeiten durch eine die vorliegend diskutierte Kolbenbaugruppe verwendende Pipettiervorrichtung ist es erforderlich, dass die Kolbenbaugruppe gegenüber einem sie radial außen umgebenden Führungsrohr einer Pipettiervorrichtung abgedichtet oder wenigstens abdichtbar ist. Dies kann beispielsweise durch einen flüssigen, insbesondere zähflüssigen, Gleitfilm an der Außenseite des Hüllrohrs erreicht werden, wobei ein solcher Dichtungsfilm auch reibungsmindernd wirken kann. Jedoch birgt die Verwendung eines solchen "Dichtungsfilms" zwischen Kolbenbaugruppe und Führungsrohr das Risiko einer Verschmutzung der zu pipettierenden Flüssigkeit, da nicht ausgeschlossen werden kann, dass wenigstens Spuren der Dichtungsflüssigkeit aus dem den Zylinder der Kolbenbaugruppe bildenden Führungsrohr bis in die jeweilige Pipettierspitze gelangen können.

Daher weist die Kolbenbaugruppe der vorliegenden Erfindung bevorzugt an einem axialen Längsende, welches nachfolgend als "Dichtungs-Längsende" bezeichnet werden wird, eine zur gemeinsamen Bewegung mit dem Hüllrohr verbundene Dichtungsanordnung auf. Diese Dichtungsanordnung ist eine Festkörper-Dichtungsanordnung. Das Dichtungs-Längsende ist im betriebsbereiten Zustand der Kolbenbaugruppe bevorzugt das der Pipettierspitze einer Pipettiervorrichtung nächstgelegene Längsende.

Damit eine Permanentmagnetanordnungsstrecke der Kolbenbaugruppe gesondert von der Dichtungsfunktion ausgeführt werden kann, weist die Dichtungsanordnung am Dichtungs-Längsende bevorzugt einen axial in Richtung vom Hüllrohr weg verlaufenden Dichtungsabschnitt auf, der wenigstens in einem Axialabschnitt radial über das Hüllrohr vorsteht, sodass das Hüllrohr unter Ausbildung eines Radialspalts mit dem ihn umgebenden Führungsrohr (Zylinder) der Pipettiervorrichtung in dieses eingesetzt werden kann. Durch den radialen Überstand des Dichtungsabschnitts über das Hüllrohr hinaus kann der Radialspalt zwischen Hüllrohr und Führungsrohr überbrückt und somit die Kolbenanordnung gegenüber dem Führungsrohr abgedichtet werden. Der radial über das Hüllrohr vorstehende Axialabschnitt erstreckt sich in Umfangsrichtung vorteilhafterweise vollständig um die Kolbenbauachse umlaufend, sodass im fertig montierten Zustand der Dichtungsabschnitt längs eines um die Kolbenachse umlaufenden Ringbandes in Kontakt mit dem Führungsrohr sein kann.

Um die bewegte Masse der Kolbenbaugruppe möglichst nicht unnötig anwachsen zu lassen, weist der Dichtungsabschnitt eine vom Hüllrohr weg abstehende Hülsenformation auf, an welcher der radial über das Hüllrohr vorstehende Axialabschnitt ausgebildet ist. Der Dichtungsabschnitt kann bei Betrachtung im Längsschnitt eine glockenförmige Gestalt aufweisen. Die radial innere Ausnehmung der Hülsenformation kann aus fertigungstechnischen Gründen einfach kreiszylindrisch oder im Falle einer spritzgusstechnischen Herstellung der Dichtungsanordnung sich von dem Hüllrohr weg aufweitend, insbesondere konisch aufweitend, ausgebildet sein.

Die Verbindung der Dichtungsanordnung mit dem Hüllrohr kann in einfacher Weise dadurch realisiert sein, dass die Dichtungsanordnung einen Verbindungsabschnitt aufweist, welcher in das Hüllrohr axial einragt und mit dem Hüllrohr verbunden ist. Der Verbindungsabschnitt kann radial außen eine Eingriffskraft erhöhende Kontur aufweisen, wie beispielsweise eine Sägezahnkontur mit unterschiedlich stark geneigten Flanken derart, dass ein Einführen des Verbindungsabschnitts in das Hüllrohr mit geringerer Kraft zu erreichen ist als ein Ausziehen des Verbindungsabschnitts aus dem Hüllrohr in der entgegengesetzten Richtung. Zusätzlich oder alternativ kann auch der Verbindungsabschnitt mit Klebstoff oder/und Vergussmasse am Hüllrohr fixiert sein.

Zur Verringerung der bewegten Masse, zur Erleichterung der Montage der Dichtungsanordnung und zur gegebenenfalls dosierten Einstellung der den Verbindungsabschnitt am Hüllrohr haltenden Klemmkraft kann der Verbindungsabschnitt in einem Axialbereich, vorzugsweise in einem axial an die Hülsenformation anschließenden Axialabschnitt, eine zentrale Ausnehmung aufweisen. Die zentrale Ausnehmung kann bevorzugt ein Gewinde aufweisen, sodass ein Montagewerkzeug vorübergehend an dem Verbindungsabschnitt anbringbar ist. Im fertig montierten Zustand kann ein Klemmstopfen in die zentrale Ausnehmung eingeführt werden, um unter elastischer radialer Verformung des Verbindungsabschnitts die zwischen dem Verbindungsabschnitt und dem ihn umgebenden Hüllrohrabschnitt wirkende Klemmkraft zu erhöhen.

Um weiter sicherzustellen, dass das Hüllrohr der wie vorstehend beschrieben einenends gegen das Führungsrohr einer Pipettiervorrichtung abgedichteten Kolbenbaugruppe mit dem dem Dichtungs-Längsende fern liegenden anderen Längsende nicht gegen das Führungsrohr schlägt - was aufgrund des durch den Radialspalt zwischen Hüllrohr und Führungsrohr begründeten Spiels grundsätzlich möglich wäre - kann in Weiterbildung der Kolbenbaugruppe der vorliegenden Anmeldung daran gedacht sein, dass an ihrem anderen Längsende, welches dem Dichtungs-Längsende der Kolbenbaugruppe entgegengesetzt ist, eine weitere Dichtungsanordnung oder ein Zentrierbauteil vorgesehen ist. Im Falle der Anordnung einer weiteren Dichtungsanordnung ist diese bevorzugt identisch mit der Dichtungsanordnung an ihrem Dichtungs-Längsende ausgebildet.

Das Zentrierbauteil sorgt dagegen nicht notwendigerweise für eine Abdichtung der Kolbenbaugruppe gegenüber dem Führungsrohr, sondern sorgt lediglich dafür, dass auch am anderen Längsende der zwischen Hüllrohr und Führungsrohr bestehende Radialspalt auch in Bewegungsphasen der Kolbenbaugruppe Bestand hat und ein Anschlagen des Hüllrohrs am Führungsrohr verhindert ist.

Das Zentrierbauteil kann daher einen Zentrierabschnitt aufweisen, welcher axial in Richtung von dem Hüllrohr weg absteht. Da vom Zentrierabschnitt keine Dichtungswirkung erwartet werden muss, kann bevorzugt die maximale radiale Abmessung des Zentrierabschnitts geringer sein als die maximale radiale Abmessung der Dichtungsanordnung am Dichtungs-Längsende. Zu betrachten ist dabei die Kolbenbaugruppe stets in einem Zustand, in welchem sie nicht von einem Führungsrohr umgeben ist, sondern frei liegt. Diese Abmessungsbeziehung gilt insbesondere dann, wenn der Zentrierabschnitt ununterbrochen um die Kolbenachse umlaufend ausgebildet ist. Für eine Zentrierung würde jedoch auch eine in Umfangsrichtung um die Kolbenachse unterbrochene Ausbildung des Zentrierabschnitts genügen, beispielsweise in Form von drei in Umfangsrichtung äquidistanten Zentrierfingern, welche vom Hüllrohr weg abstehen. Die Zahl der Zentrierfinger kann größer als drei sein, jedoch ist bevorzugt die Anzahl von drei Fingern, welche in einem Winkelabstand von 120° voneinander beabstandet sind, bevorzugt. In diesem Falle können die Finger in Umfangsrichtung sehr schmal ausgebildet werden, sodass ihre Reibungswirkung gering ist, ohne dass sie an Zentrierwirkung einbüßen. Für den Fall der fingerartigen Ausbildung des Zentrierabschnitts kann dessen radiale Abmessung in einem von einem Führungsrohr entnommenen Zustand der Kolbenbaugruppe auch ohne Weiteres größer sein als die maximale radiale Abmessung der Dichtungsanordnung.

Wiederum zur Verringerung der bewegten Masse kann vorgesehen sein, dass der Zentrierabschnitt eine in radialer Richtung zentrale, in axialer Richtung verlaufende Ausnehmung aufweist. Bevorzugt wird für die Dichtungsanordnung oder/und für die weitere Dichtungsanordnung oder/und das Zentrierbauteil ein möglichst reibungsarmer Werkstoff gewählt, welcher wenigstens die mit dem die Kolbenbaugruppe im Betrieb umgebenden Führungsrohr in Gleitkontakt stehenden Kontaktflächen bildet. Da in der Regel das Führungsrohr aus Glas ausgebildet ist, kann zur Reibungsminderung vorgesehen sein, dass die Dichtungsanordnung oder/und die weitere Dichtungsanordnung oder/und das Zentrierbauteil wenigstens an einer nach radial außen weisenden Fläche des Dichtungsabschnitts bzw. des Zentrierabschnitts aus einem mit Festkörper-Partikeln gefüllten Kunststoff gebildet ist, insbesondere aus mit Glimmer- oder/und Graphit-Partikeln gefülltem PTFE oder Polyolefin gebildet ist. Die vorstehend genannten reibungsarmen Materialien zur Ausbildung der Kontaktflächen sind auch an Führungsrohren aus anderen Materialien anwendbar, beispielsweise an metallischen Führungsrohren.

Aus Gründen einer einfachen Fertigung ist bevorzugt die Dichtungsanordnung als Ganzes oder ist das Zentrierbauteil als Ganzes aus einem der genannten Werkstoffe gebildet, bevorzugt spritzgusstechnisch.

Das Hüllrohr ist aus einem nicht magnetischen und auch nicht magnetisierbaren Werkstoff gebildet, besonders bevorzugt aus nicht rostendem hochlegiertem Stahl, da dieser mit hoher Eigensteifigkeit bei dünner Wandstärke mit hoher Form- und Maßtreue hergestellt werden kann.

Es soll jedoch nicht ausgeschlossen sein, dass das Hüllrohr auch aus Kunststoff, insbesondere aus faser- oder/und partikelverstärktem Kunststoff gebildet ist, wodurch ähnlich hohe Festigkeiten wie beim zuvor genannten hochlegierten Stahl bei geringerer Masse erzielbar sind.

Das Hüllrohr ist bevorzugt als massives Rohr ausgebildet, kann jedoch zur Einsparung von Masse als Skelettrohr mit radialen Durchbrechungen ausgebildet sein.

Die vorliegende Erfindung betrifft weiter eine Pipettiervorrichtung mit einer wie vorstehend beschrieben ausgebildeten Kolbenbaugruppe.

Die Pipettiervorrichtung weist ein sich längs einer Zylinderachse erstreckendes Führungsrohr auf, in welchem die Kolbenanordnung mit zur Zylinderachse koaxialer Kolbenachse axial bewegbar aufgenommen ist.

Radial außerhalb des Kolben-Aufnahmeraums des Führungsrohrs sind bevorzugt Spulenwicklungen angeordnet, welche durch Bestromung ein Magnetfeld erzeugen, durch das die Kolbenanordnung zu einer axialen Bewegung längs der Zylinderachse antreibbar ist.

Die Pipettiervorrichtung weist eine Kopplungsformation, an welchem eine Pipettierspitze bestimmungsgemäß lösbar ankoppelbar ist. Das der Kopplungsformation nähergelegene Längsende des Führungsrohrs ist dessen Kopplungslängsende. Das Führungsrohr kommuniziert fluiddynamisch mit der Kopplungsformation.

Gemäß einer vorteilhaften Weiterbildung der vorliegenden Erfindung ist das Führungsrohr der Pipettiervorrichtung an seinem von der Kopplungsformation fern liegenden Längsende (Wartungslängsende) offen oder durch einen bestimmungsgemäß lösbaren Deckel verschlossen.

Sofern die Dichtungsanordnung oder/und das Zentrierbauteil aufgrund der im Betrieb gleitenden Anlage am Führungsrohr Verschleißerscheinungen zeigt, kann die Kolbenbaugruppe in einfacher Weise ausgetauscht werden, indem sie durch die Spulen ihres Bewegungsantriebs von der Kopplungsformation weg durch das offene Wartungslängsende des Führungsrohrs so weit ausgefahren wird, dass sie von Hand oder von einem Werkzeug ergriffen werden kann und aus dem Führungsrohr herausgezogen werden kann. Erforderlichenfalls ist der bestimmungsgemäß lösbare Deckel hierfür zuvor vom Führungsrohr abzunehmen. Dann können an der Kolbenbaugruppe entweder die wenigstens eine Dichtungsanordnung oder/und das Zentrierbauteil ausgetauscht werden, oder es kann die Kolbenbaugruppe als Ganzes ersetzt werden.

Die überholte oder neue Kolbenbaugruppe wird durch das offene Wartungslängsende des Führungsrohrs in dieses eingeführt und so weit in das Führungsrohr von Hand oder mit einem Werkzeug hineinbewegt, bis es sich ausreichend im Wirkungsbereich der Spulen des elektromagnetischen Antriebs befindet. Dieser kann dann die Kolbenbaugruppe zur axialen Bewegung antreiben, vorzugsweise zunächst in eine Referenzposition, etwa einen unteren Totpunkt, von wo aus dann die Positionserfassung der Kolbenbaugruppe referenziert wird. Die Pipettiervorrichtung und ihre Steuerung sind dann für eine Fortsetzung des Pipettierbetriebs eingerichtet.

Die vorliegende Erfindung wird nachfolgend anhand der beiliegenden Figuren näher erläutert. Es stellt dar:
- Fig. 1: eine grobschematische Längsschnittansicht durch eine erfindungsgemäße Ausführungsform einer permanentmagnetischen Kolbenbaugruppe der vorliegenden Erfindung, und
- Fig. 2a-c): eine erfindungsgemäße Ausführungsform einer grobschematisch dargestellten Pipettiervorrichtung mit der im Führungsrohr beweglich aufgenommenen Kolbenbaugruppe von Fig. 1 in unterschiedlichen Relativpositionen relativ zum Führungsrohr und der das Führungsrohr umgebenden Spulenanordnung als Antriebsvorrichtung.

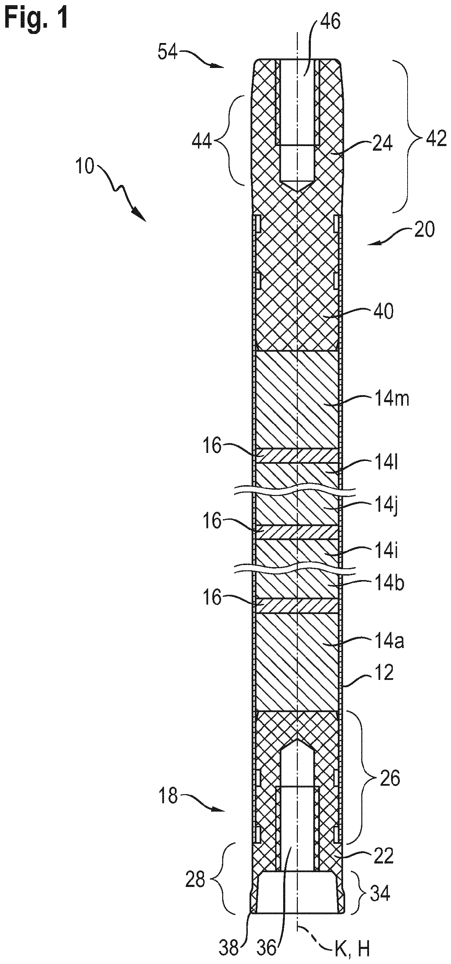

In Fig. 1 ist eine erfindungsgemäße Ausführungsform einer permanentmagnetischen Kolbenbaugruppe der vorliegenden Erfindung allgemein mit 10 bezeichnet.

Die Kolbenbaugruppe 10 erstreckt sich längs einer Kolbenachse K und umfasst ein zur Kolbenachse K konzentrisches Hüllrohr 12, welches eine Art Außenskelett der Kolbenanordnung 10 bildet. Aus Festigkeitsgründen kann das Hüllrohr 12 aus einem nicht-magnetischen und nicht magnetisierbarem Metall gebildet sein, beispielsweise aus einem hochlegierten nicht-rostenden Stahl. Aus Gewichtserwägungen kann das Hüllrohr jedoch auch aus Kunststoff gebildet sein, aus Festigkeitsgründen insbesondere aus gefülltem, vor allem faserverstärktem Kunststoff.

Eine Hüllrohrachse H fällt somit mit der Kolbenachse K zusammen.

In dem Hüllrohr 12 sind bevorzugt mehrere Permanentmagnetanordnungen 14a, ..., 14i, ... bis 14m längs der Kolbenachse K aufeinanderfolgend angeordnet, wobei zwischen jeweils zwei unmittelbar axial aufeinanderfolgenden Permanentmagnetanordnungen 14i, 14j ein bevorzugt ferromagnetischer Trennkörper 16 angeordnet ist.

Alle Trennkörper 16 sind vorliegend gleich ausgebildet und weisen eine wesentlich geringere axiale Länge auf als die beiderseits an sie angrenzenden Permanentmagnetanordnungen 14i, 14j.

Die Permanentmagnetanordnungen 14a bis 14m sind derart angeordnet, dass an den zwei einander axial nächstgelegenen Permanentmagnetanordnungen 14i, 14j gleichnamige Pole aufeinander zu weisen bzw. an den zwischen diesen Permanentmagnetanordnungen gelegenen Trennkörper angrenzen. Beispielsweise kann in Fig. 1 der Nordpol der Permanentmagnetanordnung 14a an den Trennkörper 16 angrenzen. Ebenso kann der Nordpol der Permanentmagnetanordnung 14b an den zwischen den Permanentmagnetanordnungen 14a und 14b gelegenen Trennkörper 16 angrenzen. Somit sind die Permanentmagnetanordnungen 14a bis 14m längs der Kolbenachse K mit alternierender Polarisierung angeordnet, um im Bereich der Trennkörper 16 einen axial möglichst ausgeprägten Magnetfeldgradienten zu erzeugen.

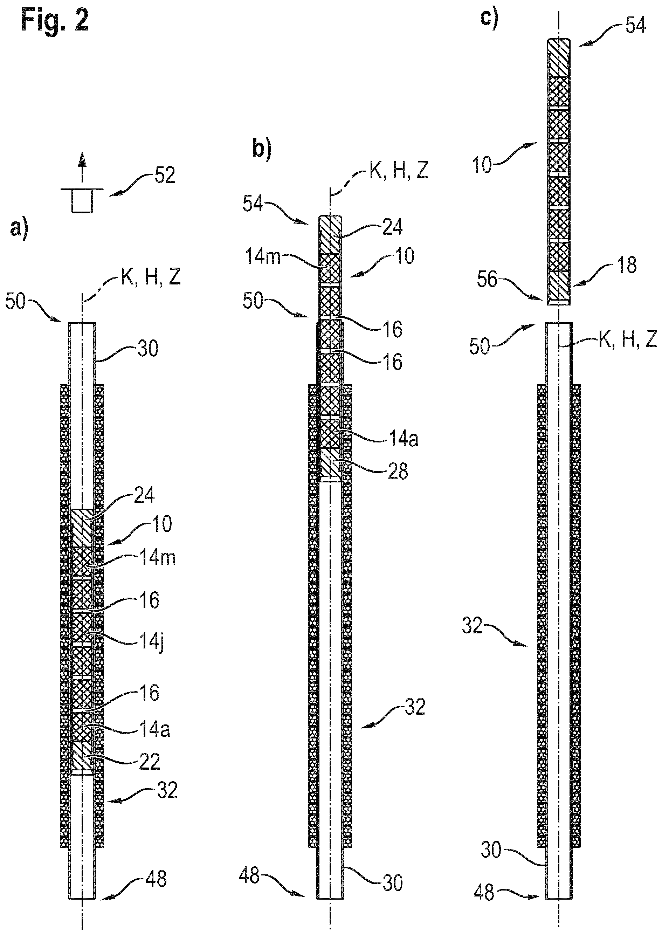

Das aus der Anordnung der Permanentmagnetanordnungen 14a bis 14m mit alternierender Polarisierung resultierende Magnetfeld dient sowohl dazu, eine möglichst effektive Ankopplung des Kolben-Magnetfelds an das Magnetfeld der das Führungsrohr 30 (siehe Fig. 2a-2c) umgebenden Spulenanordnung 32bereitzustellen, um einen möglichst positionsgenauen, effektiven linearmotorischen Antrieb bereitzustellen, als auch dazu, eine möglichst hochauflösende Positionserfassung der Kolbenposition zu erzielen, beispielsweise durch Hall-Sensoren außerhalb des Führungsrohrs 30 längs der Kolbenachse (nicht dargestellt).

Vorliegend ist jede Permanentmagnetanordnung 14a bis 14m durch genau einen Permanentmagneten gebildet. Es soll jedoch nicht ausgeschlossen sein, wenn dies aus fertigungstechnischen Erwägungen hilfreich sein könnte, eine Permanentmagnetanordnung mit einem Nord- und einem Südpol aus mehreren Permanentmagneten oder aus einer Kombination von Permanentmagneten und magnetisierbaren Bauteilen zu bilden.

Die Permanentmagnetanordnungen 14a bis 14m und die zwischen diesen angeordneten Trennkörper 16 können durch einen Klebstofffilm mit der Innenwandung des Hüllrohrs 12 verklebt und somit positionsgesichert sein. Hierzu kann das Hüllrohr 12 vor dem Einführen der Permanentmagnetanordnungen und der Trennkörper 16 an seiner Innenwand mit Klebstoff bestrichen werden. Zusätzlich oder alternativ können die Permanentmagnetanordnungen und Trennkörper an ihren Mantelflächen mit Klebstoff bestrichen werden.

Ein Klebstoffauftrag zwischen Permanentmagnetanordnungen 14a bis 14m und ihnen jeweils benachbarten Trennkörpern 16, etwa auf die sich jeweils berührenden Stirnseiten, ist zwar grundsätzlich möglich, jedoch nicht nötig, so dass die Packung aus Permanentmagnetanordnungen 14a bis 14m und dazwischen angeordneten Trennkörpern 16 axial möglichst dicht gebaut werden kann.

Das Hüllrohr 12 ist vorliegend bevorzugt kreiszylindrisch. Die Permanentmagnetanordnungen 14a sind vorliegend bevorzugt massiv-kreiszylindrisch, ebenso wie die weichmagnetischen, vorzugsweise ferromagnetischen Trennkörper 16.

Das Hüllrohr 12 weist einenends ein Dichtungs-Längsende 18 auf und weist ein dem Dichtungs-Längsende 18 entgegengesetztes weiteres Längsende 20 auf.

Am Dichtungs-Längsende 18 ist bevorzugt eine Dichtungsanordnung 22 in Form eines Dichtungsbauteils vorgesehen. Am entgegengesetzten Längsende 20 kann ebenfalls ein Dichtungsbauteil 22 oder das in Fig. 1 dargestellte Zentrierbauteil 24 angeordnet sein.

Das Dichtungsbauteil 22 weist einen Verbindungsabschnitt 26 auf, welcher axial in das Hüllrohr 12 an dessen Dichtungs-Längsende 18 einragt und ebenfalls mittels eines Klebstoffs mit der Innenwand des Hüllrohrs 12 verklebt sein kann.

Weiter weist das Dichtungsbauteil 22 einen Dichtungsabschnitt 28 auf, welcher in axialer Richtung vom Hüllrohr 12 weg absteht. Dieser Dichtungsabschnitt 28 weist bevorzugt eine Hülsenformation 34 auf, welche beispielsweise glockenförmig sich in Richtung vom Hüllrohr 12 axial weg aufweitend ausgebildet sein kann. Ein Abschnitt der Hülsenformation 34 steht radial über das Hüllrohr 12 über, um ungestört durch das Hüllrohr 12 in Anlage an das Führungsrohr 30 gelangen zu können und somit seine Dichtungsfunktion erfüllen zu können.

Die Dichtungsanordnung bzw. Dichtungsbauteil 22 kann eine zentrale Ausnehmung 36 aufweisen, in welche ein Werkzeug oder eine Gewindestange eingedreht werden kann, um beispielsweise das Dichtungsbauteil 22 aus dem Hüllrohr 12 herausziehen zu können oder um dieses radial gegen die Innenwand des Hüllrohrs 12 pressen zu können und damit stärker am Hüllrohr 12 verankern zu können.

Der radial über das Hüllrohr 12 überstehende Bereich des Hülsenabschnitts 34 bildet eine um die Kolbenachse K umlaufende Dichtlippe 38.

Auch das beispielhaft am anderen Längsende 20 des Hüllrohrs 12 gezeigte Zentrierbauteil 24 weist einen Festlegeabschnitt 40 auf, welcher analog zum Verbindungsabschnitt 26 axial in das Hüllrohr 12 vom Längsende 20 her eingeführt ist. Auch der Festlegeabschnitt 40 kann durch Klebstoff adhäsiv mit der Innenwandung des Hüllrohrs 12 verbunden sein. Das Zentrierbauteil 24 weist darüber hinaus einen Zentrierabschnitt 42 auf, welcher axial über das Hüllrohr 12 hinaus von diesem weg absteht, wobei ein Wirkabschnitt 44 des Zentrierabschnitts 42 eine radial größere Abmessung aufweist als das Hüllrohr 12 und über dieses hinaus entweder längs des gesamten Umfangs oder in Abschnitten um den Umfang herum verteilt radial vorsteht. Bevorzugt ist der radiale Überstand des Wirkabschnitts 44 geringer als der radiale Überstand des Hülsenabschnitts 34 des Zentrierbauteils 22, um unnötige Reibungswiderstände am Zentrierbauteil 24 zu vermeiden. Das Zentrierbauteil 24 dient zusammen mit dem Dichtungsbauteil 22 dazu, einen Kontakt des Hüllrohrs 12 mit dem ihn betriebsmäßig umgebenden Führungsrohr zu vermeiden.

Auch das Zentrierbauteil 24 kann eine von seinem freien Längsende her zugängliche Ausnehmung 46 aufweisen, in welche ein Werkzeug zur erleichterten Entnahme des Zentrierbauteils 24 aus dem Hüllrohr 12 einführbar und festlegbar ist. Die Ausnehmung 46 kann entgegen der Darstellung in Fig. 1 axial bis in den Bereich des Hüllrohrs 12 hineinreichen und zur Verpressung des Zentrierbauteils 24 radial gegen die Innenwandung des Hüllrohrs 12 dienen. Das Zentrierbauteil 24 und das Dichtungsbauteil 22, welche bevorzugt einstückig gebildet sind, sind vorzugsweise aus Kunststoff gebildet, und zwar aus einem gefüllten thermoplastischen Kunststoff, wobei die Kunststoffmatrix bevorzugt Polytetrafluorethylen oder ein Polyolefin ist und darin Festkörper-Partikel aus Glimmer oder aus Graphit eingebettet sind. Dadurch wird ein besonders reibungs- und verschleißarmer Kontakt mit dem die Kolbenbaugruppe 10 betriebsmäßig umgebenden Führungsrohr 30 ermöglicht.

In den Fig. 2a bis 2c ist die Kolbenbaugruppe 10 von Fig. 1 in unterschiedlichen Relativpositionen gezeigt.

Durch entsprechende Bestromung der Spulenanordnung 32 kann die permanentmagnetische Kolbenbaugruppe 10 längs der im Betrieb mit der Kolbenachse K zusammenfallenden Zylinderachse Z des Führungsrohrs 30 hochgenau und schnell bewegt werden.

Das Führungsrohr 30 weist ein einer in Fig. 2 nicht dargestellten Kopplungsformation näher gelegenes Kopplungslängsende 48 und ein diesem entgegengesetztes wartungsseitiges Längsende oder Wartungslängsende 50 auf.

Axial schließt sich an das Kopplungslängsende 48 ein Bereich der in den Fig. 2a bis 2c nicht dargestellten Pipettiervorrichtung an, zu welcher das Führungsrohr 30 gehört, an der eine Kopplungsformation in an sich bekannter Weise zur lösbaren zeitlich vorübergehenden Ankopplung einer Pipettierspitze vorgesehen ist.

Das wartungsseitige Längsende 50 des Führungsrohrs 30 ist im dargestellten Beispiel offen. Es kann auch durch einen bestimmungsgemäß lösbar am wartungsseitigen Längsende 50 angeordneten Deckel 52 verschlossen sein, welcher einen Endanschlag der Kolbenbaugruppe 10 zur Begrenzung von deren axialem Bewegungsweg in Richtung zum wartungsseitigen Längsende 50 hin bildet.

Nach etwaigem entfernen des lösbaren Deckels 52 kann die Kolbenbaugruppe 10 in einfacher Weise wenigstens so weit aus dem Führungsrohr 30 axial herausbewegt werden, dass ihr vom Zentrierbauteil 24 gebildetes Entnahmelängsende 54 nicht mehr vom Führungsrohr 30 umgeben ist und somit von Hand oder durch ein Werkzeug ergriffen werden kann. Dadurch ist es möglich, die Kolbenbaugruppe 10 vollständig axial aus dem Führungsrohr 30 herauszuziehen und aus dem Führungsrohr vollständig zu entfernen.

Eine gewartete oder eine neue Kolbenbaugruppe 10 kann dann mit dem einem das Dichtungsbauteil 22 aufweisenden Kolben-Dichtungs-Längsende 56 vorauseilend axial in das Führungsrohr 30 eingeschoben werden (s. Fig. 2c), und zwar so weit, bis ein von der Spulenanordnung 32 erzeugbares Magnetfeld so ausreichend mit dem Magnetfeld der Permanentmagnetanordnungen 14a bis 14m koppelbar ist, das die Kolbenbaugruppe 10 durch das Magnetfeld der Spulenanordnung 32 vollständig in das Führungsrohr 30 eingezogen werden kann. Der Deckel 52 kann daraufhin erforderlichenfalls erneut an dem wartungsseitigen Längsende 50 des Führungsrohrs 30 angebracht werden.

Um die Pipettiervorrichtung nach einem Austausch der Kolbenbaugruppe 10 erneut betriebsbereit herzurichten, kann die Spulenanordnung 32 die eingezogene Kolbenbaugruppe 10 in eine beispielsweise durch mechanischen Anschlag bestimmte definierte Referenzposition fahren, wo ihre Sensorik auf die bekannte Position referenziert wird. Anschließend ist die Pipettiervorrichtung wieder mit hoher Dynamik und hoher Genauigkeit betriebsbereit.

## Patentansprüche

1. Permanentmagnetische Kolbenbaugruppe (10) für eine Pipettiervorrichtung, wobei die Kolbenbaugruppe (10) sich längs einer Kolbenachse (K) erstreckt und eine Mehrzahl von Permanentmagnetanordnungen (14a-14m) aufweist, welche längs der Kolbenachse (K) derart mit alternierend entgegengesetzter Polarisierungsrichtung hintereinander angeordnet sind, dass für je zwei längs der Kolbenachse (K) unmittelbar aufeinander folgende Permanentmagnetanordnungen (14i, 14j) gilt, das einander längs der Kolbenachse (K) nächstgelegene Magnetpole unterschiedlicher aufeinander folgender Permanentmagnetanordnungen (14a-14m) gleichnamig sind, wobei die Kolbenbaugruppe (10) ein sich längs der Kolbenachse (K) als Rohrachse (H) erstreckendes Hüllrohr (12) umfasst, in welchem die Mehrzahl an Permanentmagnetanordnungen (14a-14m) aufgenommen ist,
**dadurch gekennzeichnet, dass** zwischen zwei längs der Kolbenachse (K) unmittelbar aufeinander folgenden Permanentmagnetanordnungen (14a-14m) ein weichmagnetischer Trennkörper (16) angeordnet ist.

2. Permanentmagnetische Kolbenbaugruppe (10) nach Anspruch 1,
**dadurch gekennzeichnet, dass** die Mehrzahl von Permanentanordnungen (14a-14m) eine Mehrzahl von Permanentmagneten umfasst, wobei wenigstens ein Teil der Permanentmagneten mit dem Hüllrohr (12) durch Klebstoff oder/und Vergussmasse verbunden sind.

3. Permanentmagnetische Kolbenbaugruppe (10) nach einem der vorhergehenden Ansprüche,
**dadurch gekennzeichnet, dass** der wenigstens eine weichmagnetische Trennkörper (16) ein scheibenförmiger Trennkörper (16) ist, dessen mittlere radiale Abmessung orthogonal zur Kolbenachse (K) größer ist als seine mittlere axiale Abmessung längs der Kolbenachse (K).

4. Permanentmagnetische Kolbenbaugruppe (10) nach einem der vorhergehenden Ansprüche,
**dadurch gekennzeichnet, dass** der wenigstens eine weichmagnetische Trennkörper (16) mit dem Hüllrohr (12) durch Klebstoff oder Vergussmasse verbunden ist.

5. Permanentmagnetische Kolbenbaugruppe (10) nach einem der vorhergehenden Ansprüche,
**dadurch gekennzeichnet, dass** der wenigstens eine Trennkörper (16) eine prismatische oder zylindrische, bevorzugt massiv-prismatische oder massiv-zylindrische Gestalt aufweist.

6. Permanentmagnetische Kolbenbaugruppe (10) nach einem der vorhergehenden Ansprüche,
**dadurch gekennzeichnet, dass** die Mehrzahl von Permanentanordnungen (14a-14m) eine Mehrzahl von Permanentmagneten umfasst, wobei wenigstens ein Teil der Permanentmagneten eine prismatische oder zylindrische, bevorzugt massiv-prismatische oder massiv-zylindrische Gestalt aufweist.

7. Permanentmagnetische Kolbenbaugruppe (10) nach einem der vorhergehenden Ansprüche,
**dadurch gekennzeichnet, dass** sie an einem axialen Längsende als einem Dichtungs-Längsende (56) eine zur gemeinsamen Bewegung mit dem Hüllrohr (12) verbundene Dichtungsanordnung (22) aufweist, welche einen axial in Richtung vom Hüllrohr (12) weg verlaufenden Dichtungsabschnitt (28) aufweist, der eine axial in Richtung vom Hüllrohr (12) weg abstehende Hülsenformation (34) aufweist, welche in einem Axialabschnitt radial über das Hüllrohr (12) vorsteht.

8. Permanentmagnetische Kolbenbaugruppe (10) nach Anspruch 7,
**dadurch gekennzeichnet, dass** die Dichtungsanordnung (22) einen Verbindungsabschnitt (26) aufweist, welcher in das Hüllrohr (12) axial einragt und mit dem Hüllrohr (12) verbunden ist.

9. Permanentmagnetische Kolbenbaugruppe (10) nach Anspruch 8,
**dadurch gekennzeichnet, dass** der Verbindungsabschnitt (26) in einem Axialbereich, vorzugsweise in einem axial an die Hülsenformation (34) anschließenden Axialabschnitt, eine zentrale Ausnehmung (36) aufweist.

10. Permanentmagnetische Kolbenbaugruppe (10) nach einem der Ansprüche 7 bis 9,
**dadurch gekennzeichnet, dass** an ihrem anderen Längsende (54), welches dem Dichtungs-Längsende (56) der Kolbenbaugruppe (10) entgegengesetzt ist, eine weitere Dichtungsanordnung oder ein Zentrierbauteil (24) vorgesehen ist.

11. Permanentmagnetische Kolbenbaugruppe (10) nach Anspruch 10,
**dadurch gekennzeichnet, dass** das Zentrierbauteil (24) einen Zentrierabschnitt (42) aufweist, welcher axial in Richtung von dem Hüllrohr (12) weg absteht, wobei bevorzugt die maximale radiale Abmessung des Zentrierabschnitts (42) geringer ist als jene der Dichtungsanordnung (22) am Dichtungs-Längsende (56).

12. Permanentmagnetische Kolbenbaugruppe (10) nach Anspruch 11,
**dadurch gekennzeichnet, dass** der Zentrierabschnitt (42) eine in radialer Richtung zentrale, in axialer Richtung verlaufende Ausnehmung (46) aufweist.

13. Permanentmagnetische Kolbenbaugruppe (10) nach einem der Ansprüche 7 bis 12,
**dadurch gekennzeichnet, dass** die Dichtungsanordnung (22) oder/und die weitere Dichtungsanordnung oder/und das Zentrierbauteil (24) wenigstens an einer nach radial außen weisenden Fläche des Dichtungsabschnitts (28) bzw. des Zentrierabschnitts (42) aus einem mit Festkörper-Partikeln gefüllten Kunststoff gebildet ist, insbesondere aus mit Glimmer- oder/und Graphit-Partikeln gefülltem PTFE oder Polyolefin gebildet ist.

14. Pipettiervorrichtung mit einer Kolbenbaugruppe (10) nach einem der vorhergehenden Ansprüche.

## Claims

1. A permanent-magnet piston subassembly (10) for a pipetting apparatus, the piston subassembly (10) extending along a piston axis (K) and comprising a plurality of permanent-magnet arrangements (14a to 14m) that are arranged one behind another along the piston axis (K) with alternatingly opposite polarization directions in such a way that for each two permanent-magnet arrangements (14i, 14j) directly successive along the piston axis, it is the case that magnetic poles located closest to one another along the piston axis (K), of different successive permanent-magnetic arrangements (14a to 14m), are like poles,
wherein the piston subassembly (10) encompasses a sheath tube (12), extending along the piston axis (K) constituting a tube axis (H), in which the plurality of permanent-magnet arrangements (14a to 14m) are received,
**characterized in that** a soft-magnetic separating body (16) is arranged between two permanent-magnet arrangements (14a to 14m) directly successive along the piston axis (K).

2. The permanent-magnet piston subassembly (10) according to Claim 1,
**characterized in that** the plurality of permanent-magnet arrangements (14a to 14m) encompasses a plurality of permanent magnets, at least some of the permanent magnets being joined to the sheath tube (12) using adhesive and/or encapsulating compound.

3. The permanent-magnet piston subassembly (10) according to one of the preceding claims,
**characterized in that** the at least one soft-magnetic separating body (16) is a disk-shaped separating body (16) whose average radial dimension orthogonally to the piston axis (K) is larger than its average axial dimension along the piston axis (K).

4. The permanent-magnet piston subassembly (10) according to one of the preceding claims,
**characterized in that** the at least one soft-magnetic separating body (16) is joined to the sheath tube (12) with adhesive or encapsulating compound.

5. The permanent-magnet piston subassembly (10) according to one of the preceding claims,
**characterized in that** the at least one separating body (16) has a prismatic or cylindrical, preferably solid prismatic or solid cylindrical, conformation.

6. The permanent-magnet piston subassembly (10) according to one of the preceding claims,
**characterized in that** the plurality of permanent-magnet arrangements (14a to 14m) encompasses a plurality of permanent magnets, at least some of the permanent magnets having a prismatic or cylindrical, preferably solid prismatic or solid cylindrical, conformation.

7. The permanent-magnet piston subassembly (10) according to one of the preceding claims,
**characterized in that** it comprises at an axial longitudinal end, constituting a sealing longitudinal end (56), a sealing arrangement (22) joined to the sheath tube (12) for movement together, which arrangement comprises a sealing portion (28) that proceeds axially in a direction away from the sheath tube (12) and comprises a sleeve configuration (34) which protrudes axially away from the sheath tube (12) and projects in an axial portion radially beyond the sheath tube (12).

8. The permanent-magnet piston subassembly (10) according to Claim 7,
**characterized in that** the sealing arrangement (22) comprises a connecting portion (26) that projects axially into the sheath tube (12) and is connected to the sheath tube (12).

9. The permanent-magnet piston subassembly (10) according to Claim 8,
**characterized in that** the connecting portion (26) comprises a central recess (36) in an axial region, preferably in an axial portion axially adjacent to the sleeve configuration (34).

10. The permanent-magnet piston subassembly (10) according to one of Claims 7 to 9,
**characterized in that** a further sealing arrangement or a centering component (24) is provided at its other longitudinal end (54) that is located oppositely from the sealing longitudinal end (56) of the piston subassembly (10).

11. The permanent-magnet piston subassembly (10) according to Claim 10,
**characterized in that** the centering component (24) comprises a centering portion (42) that protrudes axially in a direction away from the sheath tube (12), the maximum radial dimension of the centering portion (42) preferably being smaller than that of the sealing arrangement (22) at the sealing longitudinal end (56).

12. The permanent-magnet piston subassembly (10) according to Claim 11,
**characterized in that** the centering portion (42) comprises a recess that is central in a radial direction and proceeds in an axial direction.

13. The permanent-magnet piston subassembly (10) according to one of Claims 7 to 12,
**characterized in that** the sealing arrangement (22) and/or the further sealing arrangement and/or the centering component (24) is constituted, at least on a radially outward-facing surface of the sealing portion (28) or of the centering portion (42), from a plastic filled with solid particles, in particular from PTFE or polyolefin filled with mica particles and/or graphite particles.

14. A pipetting apparatus having a piston subassembly (10) according to one of the preceding claims.

## Revendications

1. Ensemble de piston à aimant permanent (10) pour un dispositif de pipetage, dans lequel l'ensemble de piston (10) s'étend le long d'un axe de piston (K) et présente plusieurs agencements à aimant permanent (14a-14m) qui sont disposés les uns derrière les autres le long de l'axe de piston (K) avec des directions de polarisation alternativement opposées de telle sorte qu'il vaut pour respectivement deux agencements à aimant permanent (14i, 14j) se suivant directement le long de l'axe de piston (K), que les pôles magnétiques de différents ensembles d'aimants permanents successifs (14a-14m) qui sont les plus proches les uns des autres le long de l'axe de piston (K) sont du même nom, dans lequel l'ensemble de piston (10) comprend un tube de gaine (12) s'étendant le long de l'axe de piston (K) comme axe de tube (H), dans lequel est logée la pluralité d'agencements à aimant permanent (14a-14m), **caractérisé en ce qu'**un corps de séparation magnétique doux (16) est disposé entre deux agencements à aimant permanent (14a-14m) se suivant directement le long de l'axe de piston (K).

2. Ensemble de piston à aimant permanent (10) selon la revendication 1, **caractérisé en ce que** la pluralité d'agencements permanents (14a-14m) comprend une pluralité d'aimants permanents, dans lequel au moins une partie des aimants permanents sont reliés au tube de gaine (12) par un adhésif et/ou un composé d'étanchéité.

3. Ensemble de piston à aimant permanent (10) selon l'une des revendications précédentes, **caractérisé en ce que** ledit au moins un corps de séparation magnétique doux (16) est un corps de séparation en forme de disque (16) dont la dimension radiale moyenne orthogonale à l'axe de piston (K) est supérieure à sa dimension axiale moyenne le long de l'axe de piston (K).

4. Ensemble de piston à aimant permanent (10) selon l'une des revendications précédentes, **caractérisé en ce que** ledit au moins un corps de séparation magnétique doux (16) est relié au tube de gaine (12) par un adhésif ou une masse d'étanchéité.

5. Ensemble de piston à aimant permanent (10) selon l'une des revendications précédentes, **caractérisé en ce que** ledit au moins un corps de séparation (16) a une forme prismatique ou cylindrique, de préférence prismatique solide ou cylindrique solide.

6. Ensemble de piston à aimant permanent (10) selon l'une des revendications précédentes, **caractérisé en ce que** la pluralité d'agencements permanents (14a-14m) comprend une pluralité d'aimants permanents, dans lequel au moins une partie des aimants permanents a une forme prismatique ou cylindrique, de préférence prismatique massive ou cylindrique massive.

7. Ensemble de piston à aimant permanent (10) selon l'une des revendications précédentes, **caractérisé en ce qu'**il comprend à une extrémité longitudinale axiale, en tant qu'extrémité longitudinale d'étanchéité (56), un agencement d'étanchéité (22) relié au tube de gaine (12) pour un mouvement commun, lequel agencement d'étanchéité (22) comprend une section d'étanchéité (28) s'étendant axialement dans la direction s'éloignant du tube de gaine (12), laquelle section d'étanchéité (28) comprend une formation de gaine (34) faisant saillie axialement dans la direction s'éloignant du tube de gaine (12), laquelle formation de gaine (34) fait saillie radialement au-delà du tube de gaine (12) dans une section axiale.

8. Ensemble de piston à aimant permanent (10) selon la revendication 7, **caractérisé en ce que** l'ensemble d'étanchéité (22) présente une partie de raccordement (26) qui fait saillie axialement dans le tube de gaine (12) et est reliée au tube de gaine (12).

9. Ensemble de piston à aimant permanent (10) selon la revendication 8, **caractérisé en ce que** la partie de liaison (26) présente un évidement central (36) dans une zone axiale, de préférence dans une partie axiale adjacente axialement à la formation de gaine (34).

10. Ensemble de piston à aimant permanent (10) selon l'une des revendications 7 à 9,
**caractérisé en ce qu'**un autre agencement d'étanchéité ou un composant de centrage (24) est prévu à son autre extrémité longitudinale (54), qui est opposée à l'extrémité longitudinale d'étanchéité (56) de l'ensemble de piston (10).

11. Ensemble de piston à aimant permanent (10) selon la revendication 10, **caractérisé en ce que** le composant de centrage (24) présente une section de centrage (42) qui fait saillie axialement dans la direction opposée au tube de gaine (12), dans lequel la dimension radiale maximale de la section de centrage (42) est de préférence inférieure à celle de l'agencement de joint (22) à l'extrémité du joint longitudinal (56).

12. Ensemble de piston à aimant permanent (10) selon la revendication 11, **caractérisé en ce que** la section de centrage (42) présente un évidement (46) qui est central dans la direction radiale et s'étend dans la direction axiale.

13. Ensemble de piston à aimant permanent (10) selon l'une des revendications 7 à 12, **caractérisé en ce que** l'agencement d'étanchéité (22) et/ou l'autre agencement d'étanchéité et/ou le composant de centrage (24) est formé au moins sur une surface orientée radialement vers l'extérieur de la section d'étanchéité (28) ou de la section de centrage (42) d'une matière plastique remplie de particules solides, en particulier de PTFE ou de polyoléfine remplie de particules de mica et/ou de graphite.

14. Dispositif de pipetage avec un ensemble de piston (10) selon l'une des revendications précédentes.
